# EUROPÄISCHE PATENTSCHRIFT

(11) **EP 1 328 469 B1**
(45) Veröffentlichungstag und Bekanntmachung des Hinweises auf die Patenterteilung: **28.02.2007**
(21) Anmeldenummer: 01983512.3
(22) Anmeldetag: 28.09.2001
(51) Int. Cl.: C01B 13/02, B01J 19/12

(54) **VERFAHREN UND VORRICHTUNG ZUR ERZEUGUNG VON SINGULETT-SAUERSTOFF**
METHOD AND DEVICE FOR PRODUCING SINGULET OXYGEN
PROCEDE ET DISPOSITIF DE PRODUCTION D'OXYGENE SINGULET

(30) Priorität: 28.09.2000 DE 10048153
(43) Veröffentlichungstag der Anmeldung: 23.07.2003
(73) Patentinhaber: Natural Energy Solutions AG, 53773 Hennef (DE); Klemm, Jörg, 47800 Krefeld (DE)
(72) Erfinder: KLEMM, Jörg, 53773 Hennef (DE)
(74) Vertreter: Feldkamp, Rainer
(86) Internationale Anmeldenummer: PCT/EP2001/011255
(87) Internationale Veröffentlichungsnummer: WO 2002/026621

(56) Entgegenhaltungen:
- WO-A-97/29044
- DE-A- 19 835 457
- DE-C- 19 835 456
- US-A- 4 921 589

## Beschreibung

Die Erfindung bezieht sich auf eine Vorrichtung zur Erzeugung von Singuiett-Sauerstoff der im Oberbegriff des Anspruchs 1 genannten Art, sowie auf ein Verfahren zur Herstellung einer mit Farbstoff beschichteten Fläche für eine derartige Vorrichtung.

Eine derartige Vorrichtung zur Erzeugung von Singutett-Sauerstoff ist aus der WO97/29044 A1 bekannt Bei dieser Vorrichtung wird eine Kammer gebildet, die zwei Begrenzungsflächen aufweist, von denen die eine lichtdurchlässig ist, während die andere mit einem durch Lichtstrahlung anregbarem Farbstoff beschichtet ist. Diese mit dem Farbstoff beschichtete Fläche wird mit Licht von einer Lichtquelle bestrahlt, die benachbart zu der lichtdurchlässigen Fläche angeordnet ist. Die Lichtquelle ist vorzugsweise eine Halogenlampe, wobei die lichtdurchlässige Fläche einen bestimmten Teil der Strahlung ausfiltert, so daß eine Strahlung mit einem bestimmten Frequenzspektrum erzielt wird. Diese Lichtstrahlung wirkt auf den Farbstoff ein, der sich auf der mit dem Farbstoff beschichteten Fläche befindet, wobei der über diese Fläche strömende Sauerstoff in einen angeregten Zustand versetzt wird, um Singulett-Sauerstoff zu bilden. Die Farbstoffbeschichtung wird durch kinetische, thermische oder chemische Abscheidung auf einer Mikroporen aufweisenden Oberfläche aufgebracht. Der Wirkungsgrad dieser bekannten Vorrichtung ist jedoch gering, und die Herstellung der mit Farbstoff beschichteten Fläche ist sehr aufwendig, wobei weiterhin durch die Verwendung der Halogenlampe eine starke Wärmeentwicklung entsteht.

Aus der US-4 579 837 A ist es weiterhin bekannt, auf einem Substrat mehrere Schichten aus polykristallinem organischen Farbstoff aufzubringen, wie z.B. Trypaflavin, Eosin oder Tetrazen. Auch hier ist die Herstellung der mit Farbstoff beschichteten Fläche sehr aufwendig.

Der Erfindung liegt die Aufgabe zugrunde, eine Vorrichtung sowie ein Verfahren der eingangs genannten Art zu schaffen, die die Erzeugung von Singulett-Sauerstoff mit hohem Wirkungsgrad bei geringem Aufwand ermöglicht.

Diese Aufgabe wird durch die in Patentanspruch 1 bzw. 14 angegebenen Merkmale gelöst.

Vorteilhafte Ausgestaltungen und Weiterbildungen der Erfindung ergeben sich aus den jeweiligen Unteransprüchen.

Bei der erfindungsgemäßen Vorrichtung wird eine einzige Schicht des Farbstoffes durch Druckausübung und Reibung in einem Poliervorgang in die feinen Poren auf der Oberfläche des Substrates eingebracht, wobei diese Oberfläche fein aufgerauht und der Farbstoff durch das Einpolieren in die Vertiefungen der fein aufgerauhten Fläche eingebracht wird. Die Tiefe der Vertiefungen oder Poren bestimmt die Dicke der Schicht des Farbstoffes. Auf diese Weise ist der Aufwand für die Herstellung der mit Farbstoff beschichteten Fläche sehr gering. Weiterhin ergibt sich bei diesem Verfahren keine Beeinträchtigung der Eigenschaften des Farbstoffes.

Die Anregung des Farbstoffes erfolgt vorzugsweise mit Leuchtdioden, deren Emissionswellenlänge an das Absorptionsmaximum des jeweiligen Farbstoffes angepaßt ist, wobei dieses Absorptionsmaximum bei den nachstehend genannten Farbstoffen zumeist im Bereich von 600-680 nm liegt, einem Bereich, für den handelsübliche Leuchtdioden mit relativ schmalen Wellenlängenbereichen zur Verfügung stehen.

Da damit für die Anregung des Farbstoffes handelsübliche Leuchtdioden verwendet werden können, ergibt sich einerseits ein einfacher und kostengünstiger Aufbau und andererseits aufgrund des hohen Lichtwirkungsgrades derartiger Leuchtdioden ein hoher Gesamtwirkungsgrad der Vorrichtung.

Der Farbstoff kann beispielsweise grünes oder blaus Phtalozyanin, Methylenblau, Bengalrosa, Porphyrin (Zinktetraphenylporphyrin) oder Eosin sein.

Das Substrat kann vorzugsweise eine Plexiglasscheibe, eine Glasscheibe oder auch eine Metallscheibe mit isolierter Oberfläche, beispielsweise eine eloxierte Aluminiumscheibe sein.

Der Farbstoff kann zur gleichmäßigen Verteilung in einem Lösungsmittel gelöst und in einem elektromagnetischen Feld gleichmäßig auf der Fläche verteilt wird, oder das Substrat kann elektrostatisch aufgeladen und mit einem Farbstoffnebel beaufschlagt werden.

Zur Erzielung der Vertiefungen oder Poren kann das Substrat durch ein Sandstrahlverfahren aufgerauht werden.

Die Erfindung wird im folgenden anhand von in der Zeichnung dargestellten Ausführungsbeispielen noch näher erläutert. In der Zeichnung zeigen:
- Figur 1: eine Ausführungsform der Vorrichtung zur Aktivierung von Luft,
- Figur 2: eine Ausführungsform der Vorrichtung zur Aktivierung von Flüssigkeiten.

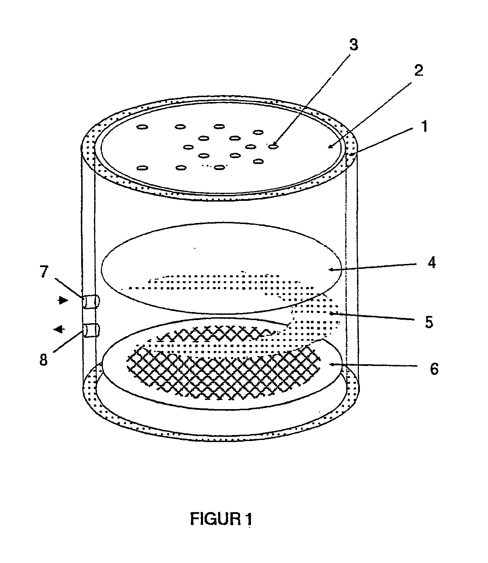

Die in Figur 1 dargestellte Ausführungsform der Vorrichtung umfaßt ein Gehäuse 1, das bei der dargestellten Ausführungsform einen zylindrischen Querschnitt aufweist, jedoch auch langgestreckt oder mit einem anderen Querschnitt ausgebildet sein kann. Dieses Gehäuse bildet eine Kammer, die durch eine erste Fläche 4 begrenzt ist, die durch ein Deckglas oder eine andere lichtdurchlässige Platte und durch eine mit einem Farbstoff beschichtete Fläche 6 begrenzt ist. Zwischen dem Deckglas 4 und der mit dem Farbstoff beschichteten Fläche 6 kann eine Luftführung und/oder ein Abstandshalter 5 angeordnet sein, der bewirkt, daß der durch die Kammer geleitete Sauerstoff oder ein Sauerstoff enthaltendes Gas in innigem Kontakt mit der beschichteten Fläche 6 gebracht wird.

Auf der von der beschichteten Fläche 6 abgewandten Seite des Deckglases 4 ist eine Leiterplatte 2 angeordnet, die Leuchtdioden 3 trägt, die durch das Deckglas 4 hindurch den Farbstoff auf der Fläche 6 beleuchten.

Die Fläche 6 wird mit dem Farbstoff dadurch beschichtet, daß diese Fläche die Oberfläche eines Substrates bildet, die fein aufgerauht und damit mit Mikroporen versehen ist, in die der Farbstoff durch Druckausübung einpoliert ist.

Zur Erzielung einer gleichmäßigen Verteilung des Farbstoffes auf der beschichteten Fläche 6 kann der Farbstoff entweder in einem geeigneten Lösungsmittel gelöst und dann in einem elektromagnetischen Feld gleichmäßig auf der Fläche verteilt werden, oder das Substrat wird elektrostatisch aufgeladen und mit einem Farbstoffnebel beaufschlagt, wobei die elektrostatische Aufladung das Farbstoffpulver anzieht, so daß sich ebenfalls eine gleichmäßige dünne Verteilung der Farbstoffpartikel auf der Oberfläche ergibt.

In beiden Fällen wird die Oberfläche nachfolgend poliert, so daß sich eine stabile gleichmäßig dünne Haftung des Farbstoffes an der fein aufgerauhten Oberfläche ergibt.

Als Farbstoffe sind insbesondere Phtalozyanin, Porphyrin (Zinktetraphenylporphyrin) und Eosin geeignet. Diese Farbstoffe haben einen maximalen Absorptions-Wellenlängenbereich zwischen etwa 600 nm und 680 nm, wobei Leuchtdioden, deren Lichtemission in diesem Wellenbereich liegt, im Handel ohne weiteres erhältlich sind. Die Anregungsspitze von Singulett-Sauerstoff, d.h. die bei der Rückkehr des Sauerstoffs in seinen Grundzustand frei werdende Energie, liegt bei 634,3 nm. Die Anregungsenergie für den Sauerstoff sollte vorzugsweise kürzerwellig sein, als 634,3 nm.

Auf der durch die Lichtstrahlung von den Leuchtdioden angeregten Farbstoffoberfläche kommt es dann zu exitonen Stößen gegen die Sauerstoffmoleküle, die in dem durch die Kammer hindurchgeleiteten Gas enthalten sind, wobei die kernfernen Elektronen der Sauerstoffmoleküle mit Sprüngen auf die nächst unvollständig besetzten Elektronenbahnen reagieren, so daß sich ein Singulett-Sauerstoff-Zustand ergibt.

Ein Sauerstoff enthaltendes Gas oder reiner Sauerstoff kann der zwischen der Deckplatte 4 und der mit Farbstoff beschichteten Fläche 6 gebildeten Kammer über einen Einlaß 7 zugeführt und über einen Auslaß 8 abgeleitet werden, wie dies in Figur 1 gezeigt ist.

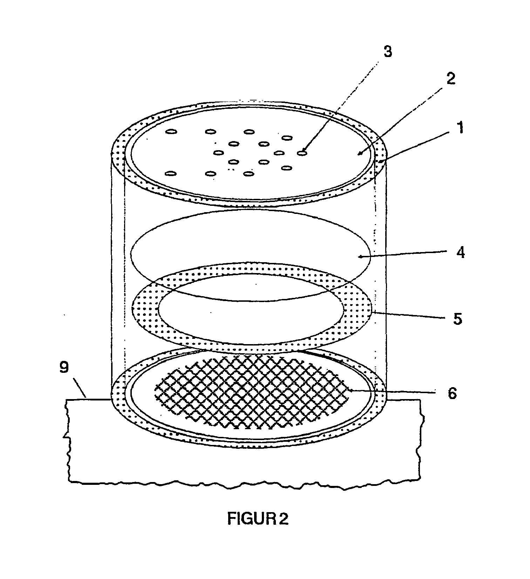

Bei der in Figur 2 gezeigten Ausführungsform sind die Gasein- und Gasauslässe fortgelassen und es wird ein lichtdurchlässiges Substrat verwendet, über dem sich ein Sauerstoff enthaltendes Gas befindet. Die Seite des Substrates, die nicht mit dem Farbstoff beschichtet ist, steht direkt in Kontakt mit Oberfläche 9 eines Körpers oder einer einer Flüssigkeit, die durch die in Farbstoff durch Lichtstrahlung erzeugten Exitonen beaufschlagt werden soll.

## Patentansprüche

1. Vorrichtung zur Erzeugung von Singulett-Sauerstoff, mit einem Gehäuse (1), das eine Kammer bildet, die zumindest zwei gegenüberliegende Flächen aufweist, von denen die eine (4) lichtdurchlässig ist, während die andere (6) eine Beschichtung aus einer mit einem durch Licht anzuregenden Farbstoff trägt, und mit einer Lichtquelle (3) zur Bestrahlung der mit dem Farbstoff beschichteten Fläche (6), **dadurch gekennzeichnet, daß** die mit dem Farbstoff beschichtete Fläche (6) durch ein Substrat mit einer fein aufgerauhten Fläche gebildet ist, und daß der Farbstoff durch Einpolieren in die Vertiefungen der fein aufgerauhten Fläche eingebracht ist.

2. Vorrichtung nach Anspruch 1, **dadurch gekennzeichnet, daß** die Lichtquelle durch Leuchtdioden (3) gebildet ist, deren Lichtemission eine Wellenlänge aufweist, die im Bereich einer maximalen Strahlungsabsorption des Farbstoffes der beschichteten Fläche (6) liegt.

3. Vorrichtung nach Anspruch 1 oder 2, **dadurch gekennzeichnet, daß** der Farbstoff Phtalozyanin ist.

4. Vorrichtung nach Anspruch 3, **dadurch gekennzeichnet, daß** der Farbstoff grünes Phtalozyanin ist.

5. Vorrichtung nach Anspruch 3, **dadurch gekennzeichnet, daß** der Farbstoff blaues Phtalozyanin ist.

6. Vorrichtung nach Anspruch 1 oder 2, **dadurch gekennzeichnet, daß** der Farbstoff Methylenblau ist.

7. Vorrichtung nach Anspruch 1 oder 2, **dadurch gekennzeichnet, daß** der Farbstoff Bengalrosa ist.

8. Vorrichtung nach Anspruch 1 oder 2, **dadurch gekennzeichnet, daß** der Farbstoff Porphyrin (Zinktetraphenylporphyrin) ist.

9. Vorrichtung nach Anspruch 1 oder 2, **dadurch gekennzeichnet, daß** der Farbstoff Eosin ist.

10. Vorrichtung nach einem der vorhergehenden Ansprüche **dadurch gekennzeichnet, daß** die Lichtemission der Leuchtdioden in einem Spektralbereich zwischen etwa 600 nm und 680 nm liegt.

11. Vorrichtung nach einem der vorhergehenden Ansprüche, **dadurch gekennzeichnet, daß** das Substrat eine Plexiglasscheibe ist.

12. Vorrichtung nach einem der Ansprüche 1 bis 11, **dadurch gekennzeichnet, daß** das Substrat eine Glasscheibe ist.

13. Vorrichtung nach einem der Ansprüche 1 bis 11, **dadurch gekennzeichnet, daß** das Substrat eine eloxierte Aluminiumsplatte ist.

14. Verfahren zur Herstellung einer mit Farbstoff beschichteten Fläche für eine Vorrichtung nach einem der vorhergehenden Ansprüche, **dadurch gekennzeichnet, daß** ein Substrat mit einer fein aufgerauhten Oberfläche versehen wird, auf der der Farbstoff gleichmäßig verteilt und durch Druckausübung und Polieren in die Poren der fein aufgerauhten Fläche eingebracht wird.

15. Verfahren nach Anspruch 14, **dadurch gekennzeichnet, daß** der Farbstoff zur gleichmäßigen Verteilung in einem Lösungsmittel gelöst und in einem elektromagnetischen Feld gleichmäßig auf der Fläche verteilt wird.

16. Verfahren nach Anspruch 14, **dadurch gekennzeichnet, daß** zur gleichmäßigen Verteilung des Farbstoffes das Substrat elektrostatisch aufgeladen und mit einem Farbstoffnebel beaufschlagt wird.

17. Verfahren nach einem der Ansprüche 14-16, **dadurch gekennzeichnet, daß** als Substrat eine Kunststoffscheibe verwendet wird, die durch ein Sandstrahlverfahren aufgerauht wird.

## Claims

1. A device for producing singulet oxygen, comprising a housing (1) forming a chamber which has at least two opposite surfaces, one (4) of these surfaces being transparent, whereas the other surface (6) is covered by a coating made from a dye excitable by light and a light source (3) for irradiating the other surface (6) covered with the dye, **characterized in that** the surface (6) covered with the dye is formed by a substrate comprising a finely roughened surface, and **in that** the dye is introduced by polishing into the indentations of the finely roughened surface.

2. A device according to claim 1, **characterized in that** the light source is formed by light emitting diodes (3) whose light emission comprises a wavelength located within the range of maximum radiation absorption of the dye of the coated surface (6).

3. A device according to claim 1 or 2, **characterized in that** the dye is phthalocyanine.

4. A device according to claim 2 and 3, **characterized in that** the dye is green phthalocyanine.

5. A device according to claim 2, **characterized in that** the dye is blue phthalocyanine.

6. A device according to claim 1, **characterized in that** the dye is methylene blue.

7. A device according to claim 1, **characterized in that** the dye is rose bengal.

8. A device according to claim 1 or 2, **characterized in that** the dye is porphyrin (zinc tetraphenylporphyrin).

9. A device according to claim 1, **characterized in that** the dye is eosin.

10. A device according to claim 1, **characterized in that** the light emission of the light emitting diodes is located in a spectral region between about 600 nm and 680 nm.

11. A device according to claim 1, **characterized in that** the substrate comprises a plexiglass disc.

12. A device according to claim 1, **characterized in that** the substrate comprises a glass disc.

13. A device according to claim 1, **characterized in that** the substrate comprises an anodized aluminium plate.

14. A method for producing a dye coated surface for a device according to any of the preceding claims, **characterized in that** a substrate is provided with a finely roughened surface onto which the dye is uniformly distributed and introduced into the pores of the finely roughened surface by exerting pressure and polishing.

15. A method according to claim 14, **characterized in that** for uniformly distributing the dye, the dye is dissolved in a solvent and is uniformly distributed on said surface within an electromagnetic field.

16. A method according to claim 14, **characterized in that** for uniformly distributing the dye, the substrate is electrostatically charged and exposed to a dye mist.

17. A method according to any of the claims 14-16, **characterized in that** a plastic material disc is used as substrate and is finely roughened by a sand blasting method.

## Revendications

1. Dispositif de production d'oxygène singulet, avec un boîtier (1) qui forme une chambre laquelle présente au moins deux surfaces opposées, l'une (4) d'entre elles laissant passer la lumière, tandis que l'autre (6) porte un revêtement constitué d'un colorant à exciter par la lumière, et avec une source lumineuse (3) destinée à irradier la surface (6) revêtue du colorant, **caractérisé en ce que** la surface (6) revêtue du colorant est formée par un substrat doté d'une surface rendue finement rugueuse, et **en ce que** le colorant est introduit par polissage dans les creux de la surface rendue finement rugueuse.

2. Dispositif selon la revendication 1, **caractérisé en ce que** la source lumineuse est formée par des diodes lumineuses ou électroluminescentes (3), dont l'émission de lumière présente une longueur d'onde qui se situe dans la plage d'une absorption maximale de rayonnement du colorant de la surface revêtue (6).

3. Dispositif selon la revendication 1 ou 2, **caractérisé en ce que** le colorant est la phtalocyanine.

4. Dispositif selon la revendication 3, **caractérisé en ce que** le colorant est de la phtalocyanine verte.

5. Dispositif selon la revendication 3, **caractérisé en ce que** le colorant est de la phtalocyanine bleue.

6. Dispositif selon la revendication 1 ou 2, **caractérisé en ce que** le colorant est du bleu de méthylène.

7. Dispositif selon la revendication 1 ou 2, **caractérisé en ce que** le colorant est du rose Bengale.

8. Dispositif selon la revendication 1 ou 2, **caractérisé en ce que** le colorant est de la porphyrine (tétraphénylporphyrine de zinc)

9. Dispositif selon la revendication 1 ou 2, **caractérisé en ce que** le colorant est de l'éosine.

10. Dispositif selon l'une quelconque des revendications précédentes, **caractérisé en ce que** l'émission de lumière des diodes lumineuses ou électroluminescentes se situe dans un domaine spectral compris entre environ 600 nm et 680 nm.

11. Dispositif selon l'une quelconque des revendications précédentes, **caractérisé en ce que** le substrat est une plaque de plexiglas.

12. Dispositif selon l'une quelconque des revendications 1 à 11, **caractérisé en ce que** le substrat est une plaque de verre.

13. Dispositif selon l'une quelconque des revendications 1 à 11, **caractérisé en ce que** le substrat est une plaque d'aluminium anodisée.

14. Procédé de fabrication d'une surface revêtue de colorant pour un dispositif selon l'une quelconque des revendications précédentes, **caractérisé en ce qu'**un substrat est doté d'une surface rendue finement rugueuse, sur laquelle le colorant est réparti de manière homogène et est introduit par l'exercice d'une pression et par polissage dans les pores de la surface rendue finement rugueuse.

15. Procédé selon la revendication 14, **caractérisé en ce que** pour la répartition homogène, le colorant est dissous dans un solvant et est réparti de manière homogène sur la surface dans un champ électromagnétique.

16. Procédé selon la revendication 14, **caractérisé en ce que** pour la répartition homogène du colorant, le substrat est chargé de manière électrostatique et est alimenté en un embrun de colorant.

17. Procédé selon l'une quelconque des revendications 14 à 16, **caractérisé en ce qu'**on utilise comme substrat une plaque en matière synthétique, qui est rendue rugueuse par un procédé de sablage.
